# EUROPÄISCHE PATENTSCHRIFT

(11) **EP 0 864 587 B1**
(45) Veröffentlichungstag und Bekanntmachung des Hinweises auf die Patenterteilung: **20.08.2003**
(21) Anmeldenummer: 98101231.3
(22) Anmeldetag: 26.01.1998
(51) Int. Cl.: C08C 19/36, C09D 115/00

(54) **Wässrige Bindemittel auf Polybutadien-Basis**
Aqueous binder based on polybutadiene
Liants aqueus à base de polybutadiène

(30) Priorität: 13.03.1997 DE 19710373
(43) Veröffentlichungstag der Anmeldung: 16.09.1998
(73) Patentinhaber: Degussa AG, 40474 Düsseldorf (DE)
(72) Erfinder: Paulen, Wilfried, Dr., 45772 Marl (DE); Elm, Rainer, Dr., 45772 Marl (DE); Freitag, Werner, Dr., 46286 Dorsten (DE); Ortelt, Martina, Dr., 45770 Marl (DE); Sasse, Wolfgang, 45721 Haltern (DE); Sokolowski, Karin, 45896 Gelsenkirchen (DE)

(56) Entgegenhaltungen:
- DE-A- 3 632 277
- DE-A- 4 112 535
- DATABASE WPI Section Ch, Week 8317 Derwent Publications Ltd., London, GB; Class A12, AN 83-40093K XP002069455 & JP 58 045 223 A (NIPPON OIL KK)

## Beschreibung

Die Erfindung betrifft wäßrige Bindemittel auf Polybutadienbasis, die sich zum Einsatz als lufttrocknende Überzugsmittel eignen und die völlig frei von organischen Lösemitteln verarbeitet werden können.

Derartige wäßrige Beschichtungssysteme gewinnen zunehmend an Bedeutung, da sie einen entscheidenden Beitrag zur Reduzierung der Lösemittelimmission leisten.

Aufgrund des ständig wachsenden Umweltbewußtseins, verschärfter gesetzlicher Auflagen und der Einführung von Ökobilanzierungen nimmt der Trend zur Reinhaltung der Luft weiter zu. Daher sind Industrie und Anwender mehr denn je aufgefordert, Prozesse und Produkte ohne schädliche, umweltbelastende Immissionen zu entwickeln und einzusetzen.

Diese Erfindung versucht einen Beitrag in Richtung immissionsvermindernder Lacksysteme zu leisten.

Waßrige Bindemittel auf Polybutadienbasis sind über eine Modifizierung mit Maleinsäureanhydrid (MSA) zugänglich, indem die resultierenden Anhydridfunktionen derart weiter umgesetzt werden, daß freie Carboxylgruppen entstehen. Nach teilweiser bzw. vollständiger Neutralisation dieser Carboxylgruppen können dann wasserlösliche bzw. wasserdispergierbare Bindemittel erhalten werden.

Die bekannte Modifizierung von Polybutadienen mit MSA wird beispielsweise in der DE-AS 12 92 288 und in der DE-AS 12 19 684 beschrieben Filme aus derartigen MSA-Addukten zeigen gegenüber solchen mit nicht modifizierten Polybuadienen eine verbesserte Substrathaftung.

Polybutadien/Maleinsäureanhydrid-Addukte können partiell verestert oder amidiert werden siehe DE 10 26 900, 25 07 809, 26 33 362 oder 27 33 274. Die bei der Umsetzung mit Alkohol entstehenden Halbester bzw. die bei der Reaktion mit sekundären Aminen resultierenden Halbamide weisen freie Carboxylgruppen auf. Diese können teilweise oder vollständig neutralisiert werden, wodurch wasserlösliche bzw. wasserdispergierbare Bindemittel entstehen.

Es ist auch möglich wasserlösliche bzw. wasserdispergierbare Bindemittel durch Imidierung der Anhydridgruppen zu erhalten.

Gemäß DE-OS 25 53 593 werden z. B. durch die Umsetzung von Polybutadien/Maleinsäureanhydrid-Addukte mit Ammoniak oder Harnstoff wasserverdunnbare Polymerölimide erhalten.

In der DE-OS 27 54 733 bzw. 26 16 591 werden Maleinsäureanhydrid-haltige Polybutadiene mit Diaminen umgesetzt, die eine primäre und eine tertiäre Aminfunktion enthalten. Während die primäre Aminfunktion mit den Anhydridgruppen unter Imidierung reagiert, läßt sich die tertiäre Aminfunktion mit Säuren neutralisieren, wodurch die so funktionalisierten Polybutadiene ebenfalls wasserlöslich werden.

Der Anreiz zum Einsatz von Polybutadienölen mit hohem cis-Doppelbindungsanteil als Basis für Lackbindemittel besteht vor allem in den guten Trocknungseigenschaften an Luft und der hervorragenden Chemikalienresistenz der Lackfilme. Die Verbesserung der Trocknungseigenschaften, insbesondere der physikalischen Antrocknung von polybutadienbasierenden Bindemitteln kann gemäß DE-OS 27 33 274 durch eine Pfropfreaktion mit ungesättigten Monomeren erreicht werden.

Derartige gepfropfte Polybutadien/Maleinsäureanhydrid-Addukte können nach dem gleichen weiter oben beschriebenen Muster wasserlöslich bzw. wasserdispergierbar gemacht werden, siehe DE 26 33 262, 27 33 274, 27 54 733 und EP 0 170 184.

Pfropfreaktionen ungesättigter Monomerer an Polybutadien/Maleinsäureanhydrid-Addukte werden in Lösung, vorzugsweise aber als Massepolymerisation mit Radikalbildnern durchgeführt. Derartige radikalisch gesteuerten Pfropfpolymerisationen verlaufen in der Regel uneinheitlich und unvollständig ab, so daß im Bindemittel noch nennenswerte Restmengen an Monomeren und Oligomeren zurückbleiben.

Diese führen bei den aus gepfropften Bindemitteln hergestellten wäßrigen Dispersionen bzw. Lacken zu starken Geruchsbeeinträchtigungen. Es ist leicht einzusehen, daß nach der Applizierung solcher Dispersionen bzw. Lacke die Monomeren bei der Trocknung zusammen mit dem Wasser aus dem Lackfilm entweichen und damit zu einer umweltbelastenden Immission führen.

Bei den gewöhnlich zur Pfropfreaktion verwendeten ungesättigten Monomeren wie beispielsweise Styrol oder Acrylate bzw. Methacrylate handelt es sich zudem noch um Gefahrstoffe mit einem gewissen toxischen Potential.

Aufgabe dieser Erfindung war es ein völlig lösemittelfreies, umweltfreundliches Bindemittel auf Polybutadienbasis ohne die Nachteile der Pfropfreaktion wie z. B. die starke Geruchsbeeinträchtigung durch Restmonomere zu finden. Dieses sollte aber dennoch die schnelle physikalische Antrocknung der gepfropften Bindemittel besitzen.

Weiterhin sollte das Bindemittel gute lacktechnische Eigenschaften aufweisen, wie beispielsweise hervorragende Korrosionsschutzbeständigkeit, gute Substrathaftung und ausreichende Lagerstabilität der daraus hergestellten wäßrigen Dispersionen und pigmentierten Systeme.

Die Aufgabe konnte durch die nachfolgend beschriebenen Bindemittel gelöst werden.

Gegenstand der Erfindung sind demnach wasserlösliche oder wasserdispergierbare Bindemittel im wesentlichen enthaltend
A. 35 bis 95 Gew.-% Polybutadien
B. 0 bis 40 Gew.-% Kohlenwasserstoffharze
C. 5 bis 25 Gew.-% Maleinsäureanhydrid,
wobei die Komponenten A. bis C. so gewählt werden, daß deren Summe 100 Gew.-% beträgt und wobei die eingebauten Anhydridgruppen weiter umgesetzt sind mit

| | |
|---|---|
| α. Aminocarbonsäuren | zu 30 bis 100 % |
| β. Sekundären Aminen | zu 0 bis 70 % |
| γ. Alkoholen | zu 0 bis 70% |
| δ. Anilin | zu 0 bis 70%, |

und wobei die Aminosäuren ausgewählt werden aus der Gruppe der aromatischen Aminosäuren und/oder aus Aminoessigsäure, 2-Aminopropansäure, 3-Aminopropansäure, Aminobutansäure, Aminohexansäure, Aminooctansäure, Aminoundecansäure, Aminododekansäure, 1-Aminocyclopentansäure, 1-Aminocyclohexansäure.

Zur Erzielung guter lacktechnischer Eigenschaften, neben einer schnellen physikalischen Antrocknung sind mindestens 30 bis 100 %, vorzugsweise 45 bis 85 %, der Anhydridstrukturen mit Aminocarbonsäuren, vorzugsweise mit aromatischen Aminocarbonsäuren, zu Imidgruppen umgesetzt.

Verbleibende nicht mit Aminocarbonsäuren umgesetzte Anhydridgruppen können teilweise oder komplett sekundären Aminen und/oder Alkoholen und/oder Anilin weiter umgesetzt sein.

Wäßrige Dispersionen bzw. Lacke aus derartig modifizierten Polybutadien-basierenden Bindemitteln besitzen nicht mehr den Nachteil der Geruchsbeeinträchtigung durch die teilweise toxischen Restmonomeren, da auf eine Pfropfreaktion mit ungesättigten Monomeren gänzlich verzichtet wurde.

Neben einer schnellen Antrocknung sind auch weitere anwendungstechnische Eigenschaften wie Verträglichkeit der erfindungsgemäßen Bindemittel zu zinkhaltigen Pigmenten, sowie gute Substrathaftung und ausgezeichnete Korrosionsbeständigkeit, der aus diesen Bindemitteln hergestellten Korrosionsschutzlacken gegeben. Die Lagerstabilität der wäßrigen Dispersionen wie auch der daraus pigmentierten Systeme sind hervorragend.

In der DE-OS 36 32 277 wird zwar auch die Umsetzung von Maleinsäureanhydridmodifizierten Polybutadienen mit Aminocarbonsäuren beschrieben, jedoch sind diese Bindemittel ausnahmslos mit ungesättigten Monomeren gepfropft und weisen daher wiederum den Nachteil der Geruchsbeeinträchtigung auf.

Laut DE-OS 36 32 277 soll die Umsetzung von gepfropften Polybutadien/Maleinsäureanhydrid-Addukten mit Aminosäuren bewirken, daß die Verträglichkeit der so modifizierten Bindemittel zu zinkhaltigen Korrosionsschutzpigmenten verbessert wird, damit bei der Verarbeitung auf den Einsatz von Lösemitteln verzichtet werden kann. Weiterhin wird auf verbesserte Korrosionsschutzwerte hingewiesen.

Von der Möglichkeit einer Verbesserung der physikalischen Antrocknung ist dort jedoch nicht einmal andeutungsweise die Rede.

Bevorzugte Polybutadiene besitzen als Zahlenmittel bestimmte Molekulargewichte von 500 bis 10 000 und Jodzahlen nach Wijs von 300 bis 500 mg Jod/100 g Substanz.

Sie weisen vorzugsweise Molekularstrukturen von 70 bis 90 % cis-Doppelbindungen, 10 bis 30 % trans-Doppelbindungen und 0 bis 3 % Vinyldoppelbindungen auf. Es können auch Mischungen verschiedener Polybutadiene und Polybutadiencopolymere eingesetzt werden.

Beispiele für Kohlenwasserstoffharze B. sind beschrieben in Karsten Lackrohstofftabellen, Curt R. Vincentz Verlag, Hannover 1992, 9. Aufl., S. 401 ff.; Encycl, Polym. Sci. Engn. 7, 758-782 Kirk-Othmer (3. Aufl.) 12, 852-869; Ullmann (4. Aufl.) 12, 539-549.

Bei diesen Kohlenwasserstoffharzen handelt es sich um Polymerisate von ungesättigten Verbindungen, die in der Regel aus Erdöl, Kohlenteer oder Terpentin gewonnen werden. Bevorzugte Kohlenwasserstoffharze B. sind ungesättigte Vertreter, die mit Maleinsäureanhydrid unter CC-Verknüpfung und Beibehaltung der Anhydridstruktur reagieren können.

Als Komponente C. wird aus Wirtschaftlichkeits- und Reaktivitätsgründen bevorzugt Maleinsäureanhydrid eingesetzt. Es können jedoch auch andere ethylenisch ungesättigte Dicarboxyverbindungen, wie ethylenisch ungesättigte Dicarbonsäuren, deren Anhydride oder Monoester Verwendung finden.

Beispiele für die genannten Verbindungen sind: Maleinsäure, Fumarsäure, Itaconsäure, 3,6-Tetrahydrophthalsäure, Itakonsäureanhydrid, 1,2-Dimethylmaleinsäureanhydrid, Maleinsäuremonomethylester oder - monoethylester und andere.

Die Herstellung der Polybutadien/Maleinsäureanhydrid-Addukte aus A. Polybutadienen, gegebenenfalls B. Kohlenwasserstoffharzen und C. Maleinsäureanhydrid erfolgt nach bekannten Methoden.

Man erhitzt nach Zusatz eines Polymerisationsinhibitors die Komponenten im allgemeinen 2 bis 5 Stunden auf Temperaturen von 180 bis 200 °C unter Inertgasatmosphäre (z. B. Stickstoff, Argon). Die Menge des Polymerisationsinhibitors liegt in der Regel in einer Größenordnung von 0,01 bis 0,5 Gew-.% bezogen auf die Summe aus A + C oder A + B + C.

Bevorzugte Inhibitoren sind beispielsweise Hydrochinon, 2,5-Di-tert.-butylhydrochinon, Hydrochinonmonoethylether, Kupfernaphthenat, Kupferacetylacetonat, Phenylendiamin, sowie Produkte auf Basis von Alkyl- und Aralkyl-substituierten Phenolen.

Die Imidierungsreaktion von α. Aminocarbonsäuren und gegebenenfalls δ. Anilin mit den eingebauten Anhydridstrukturen kann nach üblichen Methoden erfolgen. Sie läßt sich in Lösung, bevorzugt jedoch in Masse gegebenenfalls in Gegenwart eines Polymerisationsinhibitors durchführen. Die Umsetzungen erfolgen bei Temperaturen von 130 bis 190 °C und Reaktionszeiten von 1 bis 5 Stunden. Die Entfernung des entstehenden Reaktionswassers kann mittels Durchleiten eines Inertgasstromes oder unter reduziertem Druck beschleunigt werden.

Zur Verbesserung der physikalischen Antrocknung sind vorzugsweise aromatische Aminocarbonsäuren geeignet, wie beispielsweise: 2-Aminobenzoesäure, 2-Amino-4-chlorbenzoesäure, 2-Amino-5-chlorbenzoesäure, 2-Amino-6-chlorbenzoesäure, 2-Amino-4-nitrobenzoesäure, 2-Amino-5-nitrobenzoesäure, 3-Aminobenzoesäure, 3-Amino-5-nitrobenzoesäure, 3-Amino-4-methylbenzoesäure, 4-Aminobenzoesäure, 4-Amino-2-nitrobenzoesaure etc.

Der Einsatz von aliphatischen bzw. cycloaliphatischen Aminocarbonsäuren wie beispielsweise Aminoessigsäure, 2-Aminopropansäure, 3-Aminopropansäure, Aminobutansäure, Aminohexansäure, Aminooctansäure, Aminoundecansäure, Aminododekansäure, 1-Aminocyclopentansäure, 1-Aminocyclohexansäure kann zu speziellen Effekten führen.
Es können auch Mischungen verschiedener Aminocarbonsäuren eingesetzt werden.

Die partielle Veresterung mit Alkoholen bzw. Amidierung mit sekundären Aminen kann nach bekannten Methoden erfolgen.

Die Umsetzung läßt sich in Lösung, vorzugsweise aber lösemittelfreier gegebenenfalls in Gegenwart eines Polymerisationsinhibitors und/oder eines Veresterungskatalysators bei 80 bis 170 °C durchführen. Bevorzugte Alkohole sind beispielesweise Methanol, Ethanol, Isopropanol, tert-.Butanol, Ethylglycol, Butylglycol, Cyclohexanol, Phenol, weitere modifizierte Phenole, 2-Hydroxyethylacrylat, 2-Hydroxypropylacrylat, 2-Hydroxyethylmethacrylat.

Es können auch Alkoholgemische eingesetzt werden.

Bevorzugte sekundäre Amine sind beispielsweise Dimethylamin, Diethylamin, Di-nbutylamin, Dicyclohexylamin.
Es können auch Amingemische eingesetzt werden.
Zur Neutralisation der erfindungsgemäßen Bindemittel kann man anorganische Basen wie beispielsweise Natron- oder Kalilauge verwenden. Bevorzugt werden jedoch Ammoniak und/oder Amine eingesetzt, wie beispielsweise Methylamin, Ethylamin, Dimethylamin, Diethylamin, Trimethylamin, Triethylamin, Monoethanolamin, Diethanolamin, Triethanolamin, Dimethylaminoethanol, Diethylaminoethanol, 2-Dimethylamino-2-methyl-1-propanol, 2-Amino-2-methyl-1-propanol, Morpholin.

Als Neutralisation können auch Amingemische eingesetzt werden.

Aus den erfindungsgemäßen Bindemitteln können nach Neutralisation der Säurefunktionen wäßrige Dispiersionen mit Festkörpergehalten bis ca. 50 % erhalten werden. Es werden vorzugsweise Neutralisationsgrade von 0,7 bis 0,95 eingestellt.

Bei der Herstellung der wäßrigen Dispersionen geht man vorzugsweise so vor, daß die Harzschmelze in ein 50 bis 90 °C heißes VE-Wasser/Neutralisationsmittel-Gemisch eingerührt wird.
Die resultierenden wäßrigen Dispersionen weisen pH-Werte von ca. 7,0 bis 10,0 auf.

Die Dispersionen können direkt zur Herstellung von klaren Filmen verwendet werden.

In der Regel enthalten sie jedoch noch Pigmente und weitere Zusatzstoffe.

Als typische anorganische Pigmente kommen beispielsweise Eisenoxide, Titandioxid, Zinkoxid, Strontiumchromat, Zinkphosphat und/oder organische Farbpigmente zum Einsatz.

Weiterhin können übliche Zusatzstoffe wie zum Beispiel Trocknungsmittel, Antioxidantien, Verlaufhilfsmittel, Stabilisatoren, Antischaummittel, Netzmittel, Thixotropierhilfsmittel und eventuell auch Füllstoffe verwendet werden.

Bevorzugte Trocknungsmittel sind die Octoate, Maleate, Naphthenate, Oleate, Resinate der Metalle Cobalt, Mangan, Chrom, Zirkonium, Eisen, Zink, Aluminium und Calcium. Die Applikation der aus den erfindungsgemäßen Bindemittel hergestellten Lacke kann mit den in der Praxis üblichen Verfahren wie Streichen, Spritzen, Tauchen, Gießen, Walzen etc. erfolgen.

Die nachfolgenden Beispiele sollen die Erfindung näher erläutern. Alle Mengenangaben beziehen sich, wenn nichts anderes vermerkt ist, auf das Gewicht.

### Beispiele

### I. Herstellung des MSA-modifizierten Ausgangsharzes für das Vergleichsbeispiel 1 und die Bespiele 1, 2 und 4

Alle Reaktionsschritte sind unter Inertgasbedinungen durchzuführen. In einem mit Stickstoff inertisierten 4 l-Glasreaktor ausgestattet mit Doppelmantel, Rührer, beheiztem Tropftrichter und Stickstoffeinleitungsrohr werden 2 100 g Polyöl 110¹⁾ und 525 g eines ungesättigten Kohlenwasserstoffharzes²⁾ vorgelegt und mit 0,02 % (bezogen auf Harzgemisch + Maleinsäureanhydrid) eines Polymerisationsinhibitors vom Alkylphenol-Typ versetzt.
Unter ständiger Stickstoffabdeckung erwärmt man unter Rühren auf 195 °C und tropft innerhalb einer Stunde 462 g geschmolzenes Maleinsäureanhydrid (80 °C) zu. Man erhöht die Innentemperatur auf 200 °C und rührt 4 weitere Stunden nach.
Man erhält ein bei Raumtemperatur viskoses Produkt mit einer Säurezahl von 153 mg KOH/g Substanz.

### II. Herstellung eines gepfropften MSA-modifizierten Polybutadiens für Vergleichsbeispiel 2

Alle Reaktionsschritte sind unter Inertgasatmosphäre durchzuführen. In einem 4 1-Glaskolben ausgestattet mit Rührer, Stickstoffeinleitungsrohr und einer Kühl- bzw. Heizvorrichtung werden 1 751 g Polyöl 110¹⁾ und 338 g Maleinsäureanhydrid eingewogen und mit jeweils 0,85 g Kupfernaphthenat und Acetylaceton versetzt. Das Gemisch wird unter Stickstoffatmosphäre auf 190 bis 200 °C aufgeheizt und 6 Stunden bei dieser Temperatur gehalten. Man erhält ein viskoses Produkt mit einer Säurezahl von 159 mg KOH/g Substanz. Nach dem Abkühlen auf 140 °C werden 531 g Styrol, 6,2 g n-Dodecylmercaptan und 2,2 g Di-tert.-butylperoxid zugegeben und bei 140 °C weitergerührt bis eine Viskosität entsprechend einer Auslaufzeit [DIN 53 211] von 51 sec. im DIN-4-Becher erreicht wird Gemessen wurde in 50 %iger styrolischer Lösung.

### III. Herstellung des MSA-modifizierten Ausgangsharzes für die Beispiele 3 und 5

Alle Reaktionsschritte werden unter Inertgasatmosphäre durchgeführt. In einem mit Stickstoff inertisierten 2 l-Glasreaktor ausgestattet mit Doppelmantel, Rührer, beheiztem Tropftrichter und Stickstoffeinleitungsrohr werden 1 150 g Polyöl 110¹⁾ vorgelegt und mit 0,03 % (bezogen auf Polyol 110¹⁾ + Maleinsäureanhydrid) eines Polymerisationsinhibitors vom Alkylphenol-Typ versetzt. Unter Stickstoffabdeckung erwärmt man den Reaktorinhalt auf 195 °C und tropft innerhalb einer Stunde 287,5 g geschmolzenes Maleinsäureanhydrid (80 °C) unter Rühren zu. Das Reaktionsgemisch wird 4 weitere Stunden bei 200 °C gerührt. Nach Abkühlung auf Raumtemperatur erhält man ein viskoses Produkt mit einer Säurezahl von 205 mg KOH/g Substanz.
¹⁾ Polyöl 100: Bezugsquelle: Hüls AG, Paul-Baumann-Str. 1, 45772 Marl
²⁾ ESCOREZ 8100:
Bezugsquelle: Deutsche EXXON CHEMICAL GmbH, Dompropzt-Ketzer-Str. 1-9, 5000 Köln 1

### Herstellung der Vergleichsbeispiele

### Vergleichsbeispiel 1

### a) Harzherstellung:

Alle Operationen werden unter Inertgasatmosphäre durchgeführt. In einem 1 l-Glasreaktor mit Doppelmantel, Rührer, Tropftrichter, Rückflußkühler und Stickstoffeinleitungsrohr werden 400 g Produkt I bei 110 °C innerhalb von einer Stunde mit 38 g Diethylamin versetzt. Man erwärmt anschließend auf 130 °C und rührt bei dieser Temperatur 3 Stunden nach.
Die Säurezahl des Harzes liegt bei 81 mg KOH/g Substanz.

### b) Dispergierung:

Zur Herstellung der wäßrigen Harzdispersion wird das Harz im 1 l-Glasreaktor auf 160 °C erwärmt und über ein beheiztes Verbindungsrohr in einem 2 l-Glasreaktor überführt. Der 2 l-Glasreaktor ist mit einem Schnellrührer bestückt und enthält ein auf 70 °C erwärmtes VE-Wasser/Neutralisationsmittel-Gemisch bestehend aus:

| | |
|---|---|
| 456 g | VE-Wasser |
| 32,3 g | 25 %ige wäßrige Ammoniaklösung |
| 18,5 g | 80 %ige wäßrige 2-Dimethylamino-2-methyl-1-propanol-Lösung |

### Vergleichsbeispiel 2

### a) Harzherstellung:

Alle Operationen werden unter Inertgasatmosphäre durchgeführt. In einem 1 l-Glasreaktor mit Doppelmantel, Rührer, Tropftrichter, Rückflußkühler und Stickstoffeinleitungsrohr werden 400 g Produkt II bei 100 °C innerhalb von 2 Stunden mit 18,8 g Diethylamin versetzt und 2 Stunden bei dieser Temperatur nachgerührt.

### b) Dispergierung:

Zur Herstellung einer wäßrigen Harzdispersion wird das Harz aus dem 1 l-Glasreaktor über ein beheiztes Verbindungsrohr in einen 2 l-Glasreaktor überführt. Der 2 l-Glasreaktor ist mit einem Schnellrührer bestückt und enthält ein auf 50 °C erwärmtes VE-Wasser/Neutralisationsmittel-Gemisch bestehend aus:

| | |
|---|---|
| 921 g | VE-Wasser |
| 27,4 g | 25 %ige wäßrige Ammoniaklösung |
| 4,6 g | Triethylamin |
| 6,2 g | Butanonoxim. |

### Herstellung der Beispiele

Sämtliche Reaktionsschnitte werden unter Inertgasatmosphäre durchgeführt. Die Herstellung der Bindemittel erfolgt in einem 1 l-Glasreaktor ausgestattet mit Doppelmantel, Rührer, Stickstoffeinleitungsrohr, Ruckflußkühler und Wasserabscheider. Das bei der Imidierungsreaktion entstehende Reaktionswasser wird mit Hilfe eines Stickstoffstroms aus dem Bindemittel entfernt.

Zur Herstellung der Dispersionen wird die im 1 l-Glasreaktor hergestellte Schmelze über ein beheiztes Verbindungsrohr in einen 2 l-Glasreaktor überführt, der mit einem Schnellrührer bestückt ist und ein auf 70 °C erwärmtes VE-Wasser/Neutralisationsmittel-Gemisch enthält.

### Beispiel 1

### a) Bindemittelherstellung:

400 g Produkt I werden im 1 l-Glasreaktor auf 160 °C erwärmt. Bei dieser Temperatur werden 71,1 g 3-Aminobenzoesäure eingefüllt und vorsichtig auf 180°C erwärmt (starkes Schäumen möglich). Nach 3 Stunden wird die Temperatur auf 185°C erhöht und eine Stunde gehalten. Die Säurezahl des modifizierten Bindemittels liegt bei 76 mg KOH/g Substanz.

### b) Bedingungen für den Dispergierprozeß im 2 l-Glasreaktor

Bindemitteltemperatur: 180°C
Das vorgelegte VE-Wasser/Neutralisationsmittel-Gemisch besteht aus

| | |
|---|---|
| 546,8 g | VE-Wasser |
| 32,6 g | 25 %ige wäßrige Ammoniaklösung |
| 18,7 g | 80 %ige wäßrige 2-Dimethylamino-2-methyl-1-propanol-Lösung |

### Beispiel 2

### a) Bindemittelherstellung:

400 g Produkt I werden im 1 l-Glasreaktor auf 160 °C erwärmt. Bei dieser Temperatur werden 71,1 g 4-Aminobenzoesäure eingefüllt und vorsichtig auf 180 °C erwärmt (starkes Aufschäumen möglich). Nach 3 Stunden wird die Temperatur auf 185 °C erhöht und eine Stunde gehalten. Die Saurezahl des resultierenden Bindemittels liegt bei 75 mg KOH/g Substanz.

### b) Bedingungen für den Dispergierprozeß im 2 l-Glasreaktor:

Bindemitteltemperatur: 180°C
Das vorgelegte VE-Wasser/Neutralisationsmittel-Gemisch besteht aus:

| | |
|---|---|
| 547 g | VE-Wasser |
| 32,2 g | 25 %ige wäßrige Ammoniaklösung |
| 18,5 g | 80 %ige wäßrige 2-Dimethylamino-2-methyl-1-propanol-Lösung |

### Beispiel 3

### a) Bindemittelherstellung

400 g Produkt III werden mit 95,2 g 4-Aminobenzoesäure wie in Beispiel 2 umgesetzt.

### b) Bedingungen für den Dispergierprozeß im 2 l-Glasreaktor:

Bindemitteltemperatur: 195°C
Das vorgelegte VE-Wasser/Neutralisationsmittel-Gemisch besteht aus:

| | |
|---|---|
| 600 g | VE-Wasser |
| 42,8 g | 25 %ige wäßrige Ammoniaklösung |
| 24,6 g | 80 %ige wäßrige 2-Dimethylamino-2-methyl-1-propanol-Lösung |

### Beispiel 4

### a) Bindemittelherstellung:

400 g Produkt I werden mit 20 g Diethylamin mit den gleichen Reaktionsbedingungen wie im Vergleichsbeispiel 1 umgesetzt. Die Säurezahl des umgesetzten Reaktionsprodukt liegt bei 96 mg KOH/g Substanz.

Dieses Reaktionsprodukt wird mit 33,7 g 4-Aminobenzoesäure wie in Beispiel 2 weiter umgesetzt.
Die Säurezahl des resultierenden Bindemittels beträgt 56 mg KOH/g Substanz.

### b) Bedingungen für den Dispergierprozeß im 2 l-Glasreaktor

Bindemitteltemperatur: 160°C
Das vorgelegte VE-Wasser/Neutralisationsmittel-Gemisch besteht aus:

| | |
|---|---|
| 457 g | VE-Wasser |
| 23,1 g | 25 %ige wäßrige Ammoniaklösung |
| 13,3 g | 80 %ige wäßrige 2-Dimethyl-2-methyl-1-propanol-Lösung |

### Beispiel 5

### a) Bindemittelherstellung:

400 g Produkt III werden mit 26,7 g Diethylamin mit den gleichen Reaktionsbedingungen wie im Vergleichsbeispiel 1 umgesetzt. Die Säurezahl des Reaktionsprodukts liegt bei 122 mg KOH/g Substanz. Dieses wird mit 45,1 g 4-Aminobenzoesäure wie in Beispiel 2 weiter umgesetzt. Die Säurezahl nach der Umsetzung beträgt 72 mg KOH/g Substanz.

### b) Bedingungen für den Dispergierprozeß im 2 l-Glasreaktor

Bindemitteltemperatur: 180°C
Das vorgelegte VE-Wasser/Neutralisationsmittel-Gemisch besteht aus:

| | |
|---|---|
| 499 g | VE-Wasser |
| 30,9 g | 25 %ige wäßrige Ammoniaklösung |
| 17,7 g | 80 %ige wäßrige 2-Dimethyl-2-methyl-1-propanol-Lösung |

Die wäßrigen Harzdispersionen der Vergleichsbeispiele, als auch der Beispiele sind bei 23 °C mindestens 6 Monate lagerstabil.
Wahrend das Styrol-gepfropfte Vergleichsbeispiel 2 einen starken Styrolgeruch aufweist, kann bei den wäßrigen Dispersionen der Beispiele 1 bis 5 kein Styrolgeruch festgestellt werden.
Das schnelle physikalische Trocknungsverhalten läßt sich an Klarlackfilmen der erfindungsgemäßen Harzdispersionen mittels Staub - und Durchtrocknung demonstrieren.

Dazu werden die wäßrigen Harzdispersionen der Vergleichsbeispiele und der Beispiele ohne Sikkativzusatz mit einem Filmziehgerät (200 µm-Naßfilmdicke) auf entfettete, gereinigte Glasplatten aufgebracht und unter Normklimabedingungen geprüft.
Die Trockenschichtstärken wurden nach 7 Tagen gemessen und lagen in einer Größenordnung von 35 bis 40 µm. Die Ergebnisse sind in Tabelle I zusammengefaßt.

**Tabelle I:**

| | Staubtrocknung | Durchtrocknung |
|---|---|---|
| Vergleichsbeispiel 1 | 180 min | > 12 h |
| Vergleichsbeispiel 2 | 90 min | 240 min |
| Beispiel 1 | 75 min | 150 min |
| Beispiel 2 | 60 min | 75 min |
| Beispiel 3 | 60 min | 75 min |
| Beispiel 4 | 75 min | 225 min |
| Beispiel 5 | 75 min | 180 min |

Weitere lacktechnische Eigenschaften wie beispielsweise Korrosionsschutzbeständigkeit und Substrathaftung wurden an Grundierlacken und in Kombination mit Decklacksystemen geprüft.

### Herstellung von Grundierlacken

Die Herstellung der Grundierlacke vom erfindungsgemäßem Beispiel 4 und dem gepfropften Vergleichsbeispiel 2 erfolgte nach folgender Beschreibung:

Die Einsatzstoffe werden in der Reihenfolge (laut Rezeptur) am Dissolver langsam zusammengegeben. Anschließend wird 1 Stunde mit Glasperlen (Durchmesser ca. 1 mm) im Verhältnis 1 : 1 (Lack : Glasperlen) an der Perlmühle dispergiert. Vor der Applikation mit der Spritzpistole wird der Lack über ein 240 µm Schnellsieb abgesiebt und dann in einer Schichtdicke von ca. 250 µm Naß aufgebracht.

### Rezeptur der Pigmentierung

| | |
|---|---|
| Bindemittel berechnet auf 40 % FK | 63,08 Masse-% |
| Bayferrox 130 | 12,61 Masse-% |
| Sicor NOP | 8,84 Masse-% |
| Talkum OOS | 13,17 Masse-% |
| Sicorin RZ | 2,00 Masse-% |
| Metolat FC 530 | 0,30 Masse-% |
| SER - AD 1010^{*)} | 1,00 Masse-% |
| Co Web 8 %ig^{**)} | 0,10 Masse-% |

| | |
|---|---|
| *) bezogen auf Gesamtansatz, als 10 %ige Lösung | |
| **) berechnet als Metall, bezogen auf Bindemittel | |

### Lieferantennachweis:

1) Hüls AG, 45764 Marl
2) Bayer AG, 51368 Leverkusen
3) BASF AG, 67056 Ludwigshafen
4) Hanf u. Nelles, 40554 Düsseldorf
5) Münzing GmbH, 74017 Heilbronn

Die aus dem gepfropften Vergleichsbeispiel 2 und dem erfindungsgemäßen Beispiel 4 hergestellten Grundierlacke wurden auf entfettete Stahlbleche aufgebracht und zunächst ohne Deckblatt geprüft. Die Ergebnisse sind in Tabelle II zusammengefaßt.

**Tabelle II**

| | Vergleich | Beispiel |
|---|---|---|
| Lagerstabilitäten der Grundierlacke Geruch der Grundierlacke | > 4 Wochen riecht nach Styrol | > 4 Wochen kein Styrolgeruch |
| Pendelhärte n. König auf Glas | | |
| [DIN 53 157] | | |
| nach 24 h | 42 s | 62 s |
| nach 1 d | 60 s | 86 s |
| nach 2 d | 76 s | 95 s |
| nach 5 d | 94 s | 117 s |
| nach 8 d | 95 s | 120 s |
| nach 16 d | 111 s | 126 s |
| Trockenschichtstärke nach | ca. 25 µm | ca. 25 µm |
| Gitterschnitthaftung [DIN EN ISO 02409] | Gt o | Gt 0 |
| Korrosionsschutzdaten | | |
| a) Salzsprühtest [DIN 53 167] | 250 h | 350 h |
| b) Haftung u. Tesabandabriß ¹⁾ am Ende des Salzsprühtests | C | A |

| | | |
|---|---|---|
| 1) Bewertungskriterien O = ohne Befund A = bis zu 1/4 der lackierten Fläche abgeblättert B = bis zur Hälfte der lackierten Fläche abgeblättert C = mehr als die Hälfte der lackierten Fläche abgeblättert | | |

Zur weiteren Untersuchung der Korrosionsschutzbeständigkeit wurden die Grundierungen des Vergleichsbeispiels 2 und des Beispiels 4 mit zwei unterschiedlichen Decklacken überspritzt und nach 10 Tagen Lagerung im Normklima [DIN 50 014] dem Salzsprühtest nach DIN 53 167 unterworfen.

Als Decklacksysteme wurden eingesetzt:
- Decklack 1:: Außenfarbe auf Basis Lipaton AE 4620
Richtrezeptur 91-142
Bezugsquelle: PolymerLatex GmbH, Marl
- Decklack 2:: Alkyd-Weißlack
Hersteller: Perfekt GmbH, Hagen
Vertreiber: Fa. Schwarz, Recklinghausen

Die Korrosionsschutzergebnisse sind in Tabelle III zusammengestellt.

**Tabelle III**

| | Vergleich | Beispiel |
|---|---|---|
| Decklack 1 | | |
| a) Salzsprühtest [DIN 53 167] | 250 | 500 |
| b) Haftung u. Tesabandabriß ¹⁾ am Ende des Salzsprühtests | | |
| Decklack ↔ Grundierung | A | A |
| Grundierung ↔ Metall | C | A |

| Decklack 2 | | |
|---|---|---|
| a) Salzsprühtest [DIN 53 167] | 1 000 | 1 000 |
| b) Haftung u. Tesabandabriß ¹⁾am Ende des Salzsprühtests | | |
| Decklack ↔ Grundierung | B | O |
| Grundierung ↔ Metall | A | O |

| | | |
|---|---|---|
| 1) Erläuterung der Bewertungskriterien siehe Tabelle II | | |

## Patentansprüche

1. Wasserlösliche oder wasserdispergierbare Bindemittel im wesentlichen enthaltend
A. 35 bis 95 Gew.-% Polybutadien
B. 0 bis 40 Gew.-% Kohlenwasserstoffharze
C. 5 bis 25 Gew.-% Maleinsäureanhydrid,
wobei die Komponenten A. bis C. so gewählt werden, daß deren Summe 100 Gew.-% beträgt und wobei die eingebauten Anhydridgruppen weiter umgesetzt sind mit
| | |
|---|---|
| α. Aminocarbonsäuren | zu 30 bis 100 % |
| β. Sekundären Aminen | zu 0 bis 70 % |
| γ. Alkoholen | zu 0 bis 70% |
| δ. Anilin | zu 0 bis 70%, |
und wobei die Aminosäuren ausgewählt werden aus der Gruppe der aromatischen Aminosäuren und/oder aus Aminoessigsäure, 2-Aminopropansäure, 3-Aminopropansäure, Aminobutansäure, Aminohexansäure, Aminooctansäure, Aminoundecansäure, Aminododekansäure, 1-Aminocyclopentansäure, 1-Aminocyclohexansäure.

2. Bindemittel gemäß Anspruch 1,
**dadurch gekennzeichnet,**
**daß** neben den Polybutadienen zusätzlich Kohlenwasserstoffharze, die mit Maleinsäureanhydrid unter CC-Verknüpfung und Beibehaltung der Anhydridstruktur reagieren können, enthalten sind.

3. Bindemittel nach mindestens einem der Ansprüche 1 bis 2,
**dadurch gekennzeichnet,**
**daß** die verbleibenden Anhydridgruppen teilweise oder komplett mit sekundären Aminen und/oder Alkoholen und/oder Anilin umgesetzt sind.

4. Bindemittel nach einem der Ansprüche 1 bis 3,
**dadurch gekennzeichnet,**
**daß** als aromatische Aminocarbonsäuren 2-Aminobenzoesäure, 2-Amino-4-chlorbenzoesäure, 2-Amino-5-chlorbenzoesäure, 2-Amino-6-chlorbenzoesäure, 2-Amino-4-nitrobenzoesäure, 2-Amino-5-nitrobenzoesäure, 3-Aminobenzoesäure, 3-Amino-5-nitrobenzoesäure, 3-Amino-4-methylbenzoesäure, 4-Aminobenzoesäure und/oder 4-Amino-2-nitroenzoesäure enthalten sind.

5. Bindemittel nach mindestens einem der Ansprüche 1 bis 4,
**dadurch gekennzeichnet,**
**daß** die eingesetzten Polybutadiene oder Polybutadiengemische mittlere Molekularmassen von 500 bis 10 000 und Jodzahlen nach Wijs von 300 bis 500 mg Jod/100 g Substanz aufweisen.

6. Bindemittel nach mindestens einem der Ansprüche 1 bis 5,
**dadurch gekennzeichnet,**
**daß** flüssige Polybutadiene mit einem cis-Doppelbindungsanteil von mindestens 50 % eingesetzt werden.

7. Bindemittel nach mindestens einem der Ansprüche 1 bis 6,
**dadurch gekennzeichnet,**
**daß** diese durch komplette oder teilweise Neutralisation der Säurefunktionen mit Basen oder Basengemischen in wasserlöslicher oder wasserdispergierbarer Form vorliegen.

8. Bindemittel nach mindestens einem der Ansprüche 1 bis 7,
**dadurch gekennzeichnet,**
**daß** das Maleinsäureanhydrid ganz oder teilweise durch andere ethylenisch ungesättigten Dicarboxylverbindungen ersetzt wird.

9. Verwendung der Bindemittel nach den Ansprüchen 1 bis 8 zum Einsatz in Klebstoffen und Beschichtungen.

10. Verwendung der Bindemittel nach den Ansprüchen 1 bis 8 als wäßrige, lufttrocknende Korrosionsschutzbindemittel.

## Claims

1. A water-soluble or water-dispersible binder essentially comprising
A. from 35 to 95% by weight of polybutadiene
B. from 0 to 40% by weight of hydrocarbon resins
C. from 5 to 25% by weight of maleic anhydride,
components A. to C. being chosen so that their sum is 100% by weight, and the incorporated anhydride groups have been reacted further
| | |
|---|---|
| to the extent of from 30 to 100% | with α. amino carboxylic acids |
| to the extent of from 0 to 70% | with β. secondary amines |
| to the extent of from 0 to 70% | with γ. alcohols |
| to the extent of from 0 to 70% | with δ. aniline, |
and the amino acids being selected from the group of aromatic amino acids and/or from aminoacetic, 2-aminopropanoic, 3-aminopropanoic, aminobutanoic, aminohexanoic, aminooctanoic, aminoundecanoic, aminododecanoic, 1-aminocyclopentanoic or 1-aminocyclohexanoic acid.

2. A binder according to claim 1, **characterized in that** not only the polybutadiene but also hydrocarbon resins which are able to react with maleic anhydride with CC linkage and retention of the anhydride structure are present.

3. A binder according to at least one of claims 1 and 2, **characterized in that** the remaining anhydride groups have been reacted, in whole or in part, with secondary amines and/or alcohols and/or aniline.

4. A binder according to any one of claims 1 to 3, **characterized in that** the aromatic amino carboxylic acids are 2-aminobenzoic, 2-amino-4-chlorobenzoic, 2-amino-5-chlorobenzoic, 2-amino-6-chlorobenzoic, 2-amino-4-nitrobenzoic, 2-amino-5-nitrobenzoic, 3-aminobenzoic, 3-amino-5-nitrobenzoic, 3-amino-4-methylbenzoic, 4-aminobenzoic and/or 4-amino-2-nitrobenzoic acid.

5. A binder according to at least one of claims 1 to 4, **characterized in that** the polybutadiene or polybutadiene mixture employed has average molecular mass of from 500 to 10,000 and iodine number in accordance with Wijs of from 300 to 500 mg of iodine/100 g of substance.

6. A binder according to at least one of claims 1 to 5, **characterized in that** liquid polybutadiene having a cis double bond content of at least 50% is employed.

7. A binder according to at least one of claims 1 to 6, **characterized in that** it is in water-soluble or water-dispersible form owing to complete or partial neutralization of the acid functions with bases or base mixtures.

8. A binder according to at least one of claims 1 to 7, **characterized in that** all or some of the maleic anhydride is replaced by other ethylenically unsaturated dicarboxyl compounds.

9. The use of the binder according to any of claims 1 to 8 in adhesives and coatings.

10. The use of the binder according to any of claims 1 to 8 as an aqueous, air-drying anticorrosion binder.

## Revendications

1. Liants solubles dans l'eau ou dispersables dans l'eau contenant pour l'essentiel :
A. 35 à 95 % en poids de polybutadiène
B. 0 à 40 % en poids de résine d'hydrocarbure
C. 5 à 25 % en poids d'acide maléique anhydre
les composants A. à C. étant choisis de façon que leur somme s'élève à 100 % en poids et les groupes anhydres intégrés étant encore transformés avec
| | | | |
|---|---|---|---|
| α. des acides aminocarboxyliques | pour | 30 à | 100 % |
| β. des amines secondaires | pour | 0 à | 70 % |
| γ. des alcools | pour | 0 à | 70 % |
| δ. de l'aniline | pour | 0 à | 70 % |
et les acides aminés étant choisis dans le groupe des acides aminés aromatiques et/ou de l'acide aminoacétique, acide 2-aminopropionique, acide 3-aminopropionique, acide aminobutane, acide aminohexane, acide aminooctane, acide aminoundécane, acide aminododécane, acide 1-aminocyclopentane, acide 1-aminocyclohexane.

2. Liants selon la revendication 1,
**caractérisés en ce qu'**
en plus des polybutadiènes, ils contiennent également des résines d'hydrocarbure, qui peuvent réagir avec l'acide maléique anhydre avec liaison CC et conservation de la structure anhydre.

3. Liants selon au moins l'une des revendications 1 à 2,
**caractérisés en ce que**
les groupes anhydres restants sont transformés partiellement ou complètement avec des amines secondaires et/ou des alcools et/ou de l'aniline.

4. Liants selon l'une des revendications 1 à 3,
**caractérisés en ce qu'**
en tant qu'acides aminocarboxyliques aromatiques, ils contiennent de l'acide 2-aminobenzoïque, acide 2-amino-4-chlorobenzoïque, acide 2-amino-5-chlorobenzoïque, acide 2-amino-6-chlorobenzoïque, acide 2-amino-4-nitrobenzoïque, acide 2-amino-5-nitrobenzoïque, acide 3-aminobenzoïque, acide 3-amino-5-nitrobenzoïque, acide 3-amino-4-méthylbenzoïque, acide 4-aminobenzoïque et/ou acide 4-amino-2-nitrobenzoïque.

5. Liants selon au moins l'une des revendications 1 à 4,
**caractérisés en ce que**
les polybutadiènes ou mélanges de polybutadiènes utilisés présentent des masses moléculaires moyennes de 500 à 10 000 et des indices d'iode selon Wijs de 300 à 500 mg d'iode/100 g de substance.

6. Liants selon au moins l'une des revendications 1 à 5,
**caractérisés en ce que**
des polybutadiènes liquides ayant une proportion de doubles liaisons cis d'au moins 50 % sont utilisés.

7. Liants selon au moins l'une des revendications 1 à 6,
**caractérisés en ce que**
par neutralisation complète ou partielle des fonctions acides avec des bases ou des mélanges de bases, ils se présentent sous forme soluble dans l'eau ou dispersable dans l'eau.

8. Liants selon au moins l'une des revendications 1 à 7,
**caractérisés en ce que**
l'acide maléique anhydre est remplacé entièrement ou partiellement par d'autres composés dicarboxyliques insaturés en éthylène.

9. Application des liants selon les revendications 1 à 8,
pour l'utilisation dans des colles et revêtements.

10. Application des liants selon les revendications 1 à 8,
comme liants aqueux, séchant à l'air, de protection anticorrosion.
